# EUROPÄISCHE PATENTANMELDUNG

(11) **EP 0 831 416 A2**
(43) Veröffentlichungstag der Anmeldung: **25.03.1998**
(21) Anmeldenummer: 97115142.8
(22) Anmeldetag: 02.09.1997
(51) Int. Cl.: G06K 7/08, G06K 19/07

(54) **Einrichtung zum induktiven hochfrequenten Datenaustausch**

(30) Priorität: 18.09.1996 DE 19637964
(71) Anmelder: Diehl Ident GmbH, 90478 Nürnberg (DE)
(72) Erfinder: Regensburger, Martin, 92318 Neumarkt (DE)
(74) Vertreter: Hofmann, Gerhard, Dipl.-Ing. Patentassessor

(57) **Zusammenfassung**

Eine Einrichtung zum induktiven hochfrequenten Datenaustausch zwischen einem Terminal (15) und einem kontaktlosen Transponder (17) führt dadurch zu besonders präziser Amplitudenmodulation des Koppel-Feldes (18) zwischen der Terminal-Spule (19) und der Transponder-Spule (19'), daß der Gleichspannungspegel an einem Abgriff (38) zwischen Spule (19) und Kondensator (28) des Serien-Resonanzkreises (27) im Terminal (15) zu Beginn eines an den Transponder (17) zu übermittelnden Kodierungs-Pulses (36) belastet und am Ende jenes Pulses (36) zur Zwangsanhebung des Abgriff-Potentials wieder entlastet wird, wenn die Hochfrequenz-Amplitude wieder auf ihren unmodulierten Normalwert ansteigen soll.

## Beschreibung

Die Erfindung betrifft eine Einrichtung gemäß dem Oberbegriff des Anspruches 1.

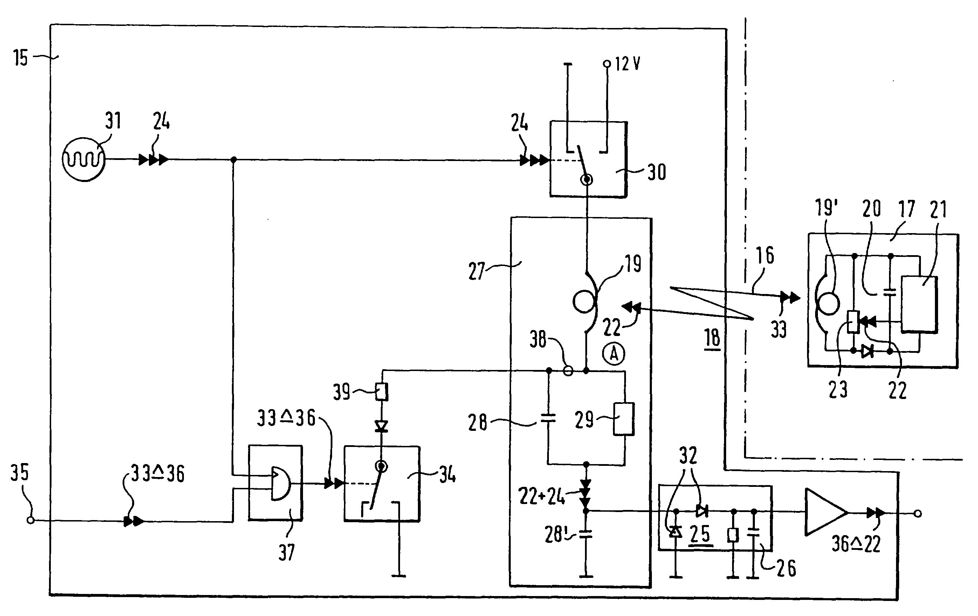

Eine derartige Einrichtung ist aus der EP 0 625 532 A1 als Lesegerät für einen Transponder bekannt, über dessen Spule ein von der magnetischen Antenne des Lesegerätes abgestrahltes Hochfrequenz-Koppelfeld (typisch in der Größenordnung von 100 kHz) durch Bedämpfung moduliert wird. So wird mittels des Koppel-Feldes eine Transponder-Information an das Lesegerät übermittelt, in welchem die Amplitudenmodulation zu einer digitalen Pulsfolge demoduliert und deren Binärinformation dann dekodiert wird. In gleicher Weise kann seitens des 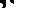 Lesegerätes" eine Bedämpfung des Koppelfeldes stattfinden, um eine Information vom Gerät in den Transponder hinein zu übertragen, der dafür mit einem beschreibbaren Speicher ausgestattet ist. Weil es sich bei dieser Betriebsweise also nicht mehr um einen Lesevorgang, sondern um einen Schreibvorgang handelt, wird die Einrichtung nachstehend als Lese-Schreib-Gerät oder einfach als Terminal bezeichnet. Die mit dem Terminal-Koppelfeld zusammenwirkenden Transponder-Spulen können in sogenannte kontaktlose Chipkarten (Elektronik Nr. 13/96 Seite 46 Bild 7), in Armbanduhrgehäuse, in Armbänder oder in besondere Transponderträger wie im Falle der Taubenringe gemäß DE 195 42 067 A1 integriert sein.

Der Datenaustausch zwischen Terminal und Transponder findet also mittels einer Bedämpfung des Hochfrequenz-Koppelfeldes nach Maßgabe der zu übermittelnden, gewöhnlich binärcodierten Information statt. In diesem Rhythmus schwankt die Amplitude der Hochfrequenzschwingung des Koppelfeldes. Für eine eindeutige Dekodierung der demodulierten Binärinformation ist deshalb anzustreben, daß am Anfang und am Ende jeder Modulationsabsenkung steile Flanken auftreten. Dieser Forderung widerspricht das natürliche Einschwingverhalten eines Kreises mit Energiespeichern wie im Falle des Resonanzkreises mit der Antennenspule zum Abstrahlen des Koppelfeldes. Zu lang andauernde Einschwingvorgänge am Anfang und am Ende der Modulation, also des zu übertragenden Pulses, können deshalb die Modulationsinformation verfälschen, indem z.B. lange und kurze Pulse nicht mehr zweifelsfrei voneinander unterscheidbar sind.

In Erkenntnis dieser Gegebenheiten liegt der Erfindung die technische Problematik zugrunde, für die beschriebene Einrichtung eine Schaltung zu exakterer digitaler Modulation bei der Informationsübertragung von einem Terminal zu einem kontaktlosen Transponder anzugeben.

Diese Aufgabe wird erfindungsgemäß im wesentlichen dadurch gelöst, daß die gattungsgemäße Einrichtung gemäß dem Kennzeichnungsteil des Hauptanspruches ausgelegt ist.

Nach dieser Lösung findet nicht nur ein sehr steiles Absenken der Hochfrequenz-Amplitude des Koppelfeldes zu Beginn des Informationspulses, sondern insbesondere danach auch ein sehr steiler Wieder-Anstieg am Ende des Informationsimpulses statt; indem das Potential an einem Abgriff zwischen Spule und Kondensator des Serienresonanzkreises zu Beginn des Informationsimpulses mehr oder weniger kurzgeschlossen und am Ende des Informationsimpulses, wenn die Amplitude des Koppelfeldes wieder aufgebaut werden soll, mit dem Anstieg der Hochfrequenzamplitude wieder angehoben wird. Diese Zwangsmaßnahme vermeidet über mehrere Hochfrequenzschwingungen sich erstreckende Einschwingvorgänge und damit unpräzise Flanken des Informationsimpulses, so daß wegen störfreier Demodulation die zulässige Distanz zwischen den Koppelspulen des Terminals und des Transponders, also der Transponder-Abstand vergrößert werden kann.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung des in der einzigen Figur der Zeichnung unter Beschränkung auf das Wesentliche stark abstrahiert skizzierten Schaltbildes für einen erfindungsgemäß ausgelegten Transponder-Terminal.

Der in der Zeichnung schaltungsmäßig dargestellte Schreib-Lese-Terminal 15 dient dem Datenaustausch 16 mit einem Transponder 17 über ein Hochfrequenz-Koppelfeld 18. Dafür sind der Terminal 15 und der Transponder 17 jeweils mit einer Koppel-Spule 19, 19' ausgestattet. Die Transponder-Spule 19' nimmt Energie aus dem Feld 18 zum Laden eines Speichers 20 auf, der dann das Auslesen eines Registers 21 in Betrieb setzt. Die darin gespeicherte binärcodierte Information 22 steuert eine Bedämpfung 23 der Transponder-Spule 19'. Die daraus resultierende Amplitudenmodulation des von der Terminal-Spule 19 abgestrahlten Hochfrequenz-Feldes 18 kann über einen Tiefpass 25 als Demodulator 26 rückgewonnen und nach Vorverstärkung als die gelesene Transponder-Information 22 ausgegeben werden.

Die Terminal-Spule 19 liegt in einem auf die abzustrahlende Feld-Frequenz 24 abgestimmten Serien-Resonanzkreis 27 mit Kondensatoren 28-28'. Erstgenannter ist durch einen Widerstand 29 bedämpft, um die Güte des Resonanzkreises 27 zu verringern und dadurch den zulässigen Abstand für den Datenaustausch 16 zwischen den Spulen 19-19' zu erhöhen. Die zu modulierende Träger-Hochfrequenz 24 im Koppelfeld 18 kommt dadurch zustande, daß der Resonanzkreis 27 hochfrequent periodisch auf Versorgungsspannung (in der Zeichnung mit 12 Volt angegeben) geschaltet wird. Der dafür vorgesehene Umschalter 30 wird in der Praxis vorzugsweise als Darlington-Schaltung oder dergleichen Emitterfolger realisiert und unmittelbar aus einem Hochfrequenzgenerator 31 angesteuert. Die durch Transponder-Bedämpfung modulierte Hochfrequenz 24 wird vom Demodulator 26 über Richtleiter 32 vor dem auf Masse liegenden Kondensator 28' des Serien-Resonanzkreises 27 abgegriffen.

Um das Koppel-Feld 18 für den Datenaustausch 16 gemäß einer außerhalb des Transponders 17 generierten und vom Terminal 15 in das Transponder-Register 21 zu übertragenden Information 33 zu modulieren, ist an einen Abgriff 38 zwischen Spule 19 und Kondensator 28 des Resonanzkreises 27 ein Lastwiderstand 39 mit Lastschalter 34 angeschlossen, der einfach als Transistorstufe in Emitterschaltung realisiert werden kann. Dieser ist normalerweise offen (hochohmig); aber er wird über einen Informationseingang mit der binärcodierten Schreib-Information 33 getaktet (geschlossen), wobei die codierte binäre Information 33 in der Dauer der Schalteransteuerung (entsprechend der Länge der Modulationseinwirkung) liegt.

Wird der Lastschalter 34 geschlossen, so wird der Mittelabgriff 38 des Schwingkreises 27 über einen Schutzwiderstand 39 auf Masse gezogen, weshalb der Kreis 27 dann nicht mehr - auch bei fortdauernder Hochfrequenz-Anregung 24 nicht mehr - schwingen kann. Wenn und solange der Kreis 27 aber über den Umschalter 30 weiterhin entweder hochfrequent angeregt oder an Versorgungsspannung gelegt wird, bleibt die Spule 19 in einer Stärke bestromt, die nun durch das Spannungsteilerverhältnis und den Widerstand 39 bestimmt ist. Die Stromstärke steigt deshalb stark an, während der Spannungsabfall über der Spule 19 gering bleibt. Dieser Spulen-Strom ist nun im wesentlichen ein Gleichstrom, denn der bei fortgesetzter Anregung überlagerte Anteil an HF-Wechselstrom (24) ist aufgrund der Induktivität der Spule 19 wesentlich kleiner als der Gleichstromanteil.
Wird dann der Modulations- oder Lastschalter 34 wieder geöffnet, so wird die durch den Stromfluß gespeicherte Energie dem Schwingkreis 27 zugeführt. Durch Synchronisation 37 des Modulations-Schalters 34 mit der Hochfrequenz 24 wird erreicht, daß diese zusätzliche Anregung (aus der Rückführung der in der Spule 19 gespeicherten Energie) die gleiche Phasenlage hat, wie die Hochfreequenz-Anregung 24 des Schwingkreises 27. So beginnt der Kreis 27 mit Öffnen des Schalters 34 - ohne Einschwingverhalten - sogleich phasenrichtig mit voller Amplitude zu schwingen an. Im Schaltbild ist berücksichtigt, wie die Ansteuerung des Schalters 34 mit der Terminal-Information 33 über einen Synchronisierer 37 erfolgt, der die Flanken des Modulations-Pulses 36 mit der Hochfrequenz 24 für die Speisung des Resonanzkreises 27 koordiniert.
So führt die erfindungsgemäße Einrichtung zum induktiven hochfrequenten Datenaustausch zwischen einem Terminal 15 und einem kontaktlosen Transponder 17 dadurch zu besonders präzisem (steilem) An- und Ausschwingen der Amplitudenmodulation des Koppel-Feldes 18 zwischen der Terminal-Spule 19 und der Transponder-Spule 19', daß der Gleichspannungspegel an einem Abgriff 38 zwischen Spule 19 und Kondensator 28 des Serien-Resonanzkreises 27 im Terminal 15 zu Beginn eines an den Transponder 17 zu übermittelnden Kodierungs-Pulses 36 belastet und am Ende jenes Pulses 36 zur Zwangsanhebung des Abgriff-Potentials wieder entlastet wird, wenn die Hochfrequenz-Amplitude wieder ihren unmodulierten Normalwert annehmen soll.

## Patentansprüche

1. Einrichtung zum induktiven hochfrequenten Datenaustausch (16) zwischen der Resonanzkreis-Spule (19) eines Terminals (15) und der Koppel-Spule (19') eines kontaktlosen Transponders (17) durch Amplitudenmodulation infolge Bedämpfung des Koppel-Feldes (18),
**dadurch gekennzeichnet**,
daß ein Abgriff (38) zwischen Spule (19) und Kondensator (28) des Serien-Resonanzkreises (27) zu Beginn des Informations-Pulses (36) zum Absenken der Hochfrequenz-Amplitude (A) belastet und am Ende des Pulses (36) potentialmäßig wieder angehoben wird.

2. Einrichtung nach Anspruch 1,
**dadurch gekennzeichnet**,
daß an dem Abgriff (38) ein Lastschalter (34) angeschlossen ist, der zu Beginn des Pulses (36) eingeschaltet wird, um den Abgriff (38) über einen Schutzwiderstand (39) auf Masse zu ziehen und dadurch die Spule (19) bei geringem Spannungsabfall über ihr im wesentlichen mit Gleichstrom zu bestromen, und der am Ende des Pulses (36) wieder geöffnet wird, um mit der in der Spule (19) gespeicherten Gleichstrom-Energie den Schwingkreis (27) gleich wieder mit voller Amplitude anschwingen zu lassen.

3. Einrichtung nach Anspruch 2,
**dadurch gekennzeichnet**,
daß die Funktion des Lastschalters (34) mit der Einspeisung einer Hochfrequenz (24) in den Resonanzkreis (27) synchronisiert ist.

4. Einrichtung nach einem der vorangehenden Ansprüche,
**dadurch gekennzeichnet**,
daß der Resonanzkreis (27) mittels eines von einem Hochfrequenz-Generator (31) gesteuerten Umschalters (30) periodisch an Betriebsspannung gelegt wird.

5. Einrichtung nach einem der vorangehenden Ansprüche,
**dadurch gekennzeichnet**,
daß dem Kondensator (28) im abgestimmten Serien-Resonanzkreis (27) ein Bedämpfungs-Widerstand (29) parallel geschaltet ist, der im Takte der binärkodiert abzustrahlenden Information (33) verkleinert wird.

6. Einrichtung nach einem der vorangehenden Ansprüche,
**dadurch gekennzeichnet**,
daß der Kondensator (28) im abgestimmten Serien-Resonanzkreis (27) zwischen dem Abgriff (38) für den Lastschalter (34) und einem Richtleiter (32) liegt, über welchem der Demodulator (26) für eine vom Transponder (17) übermittelte Information (33) angeschlossen ist und dem ein Serien-Kondensator (28') parallelgeschaltet ist.
